# EUROPEAN PATENT SPECIFICATION

(11) **EP 3 784 037 B1**
(45) Date of publication and mention of the grant of the patent: **20.11.2024**
(21) Application number: 18723321.8
(22) Date of filing: 24.04.2018
(51) Int. Cl.: A01N 1/02, A61J 1/10, A61J 1/14, B29C 65/02, B31B 70/64

(54) **FLEXIBLE CONTAINER FOR STORAGE AND TRANSPORT OF BIOPHARMACEUTICALS**
FLEXIBLER BEHÄLTER ZUR LAGERUNG UND ZUM TRANSPORT VON BIOPHARMAZEUTIKA
RÉCIPIENT FLEXIBLE POUR LE STOCKAGE ET LE TRANSPORT DE PRODUITS BIOPHARMACEUTIQUES

(43) Date of publication of application: 03.03.2021
(73) Proprietor: W. L. Gore & Associates, Inc., Newark, DE 19711 (US)
(72) Inventor: ALFORD, Joseph, Newark, Delaware 19711 (US); CAMPBELL, Donald, Newark, Delaware 19711 (US); DEIBEL, Shannon, Newark, Delaware 19711 (US); NITYANANDAN, Ashwath, Newark, Delaware 19711 (US)
(74) Representative: HGF
(86) International application number: PCT/US2018/029119
(87) International publication number: WO 2019/209268

(56) References cited:
- WO-A1-99/33714
- WO-A2-2004/108057
- US-A1- 2013 281 964
- US-A1- 2016 030 283
- H.M. KHUU ET AL: "Catastrophic failures of freezing bags for cellular therapy products: description, cause, and consequences", CYTOTHERAPY, vol. 4, no. 6, 1 October 2002 (2002-10-01), GB, pages 539 - 549, XP055540805, ISSN: 1465-3249, DOI: 10.1080/146532402761624700
- MARGRIET J. DIJKSTRA-TIEKSTRA ET AL: "Comparison of cryopreservation bags for hematopoietic progenitor cells using a WBC-enriched product", TRANSFUSION AND APHERESIS SCIENCE, vol. 52, no. 2, 1 April 2015 (2015-04-01), GB, pages 187 - 193, XP055540806, ISSN: 1473-0502, DOI: 10.1016/j.transci.2014.12.022

## Description

### FIELD

The present disclosure relates to storage bags and, in particular, to storage bags for freezing, thawing, storing, and transporting biological products.

### BACKGROUND

Single-use flexible containers are used for transportation, storage, freezing, and thawing of materials, such as biologics. Some such containers are flexible bags that are made out of plastic film. The bags may be used for storage, particularly in cryopreservation applications. The bags are typically disposable to reduce risk of cross contamination and the need for cleaning validation.

In biologic applications, bulk drug substances are stored and transported in flexible storage bags. The contents of the bags can be frozen to maintain stability over storage time. Current bags have certain drawbacks, including poor durability at freezing temperatures (which typically are -80 °C, but can be as low as -160 ° C) and during warm-up and usage of the bags. For example, existing bags are seamed around the edges which can be a high stress point during freezing or impact. During freezing, the materials from which the bags are made become brittle and when stressed failures can occur. For example, during freezing the fluid inside the bag expands, and if fluid becomes trapped in one area of the bag during freezing, the trapped fluid may expand beyond the capacity of that area causing the bag to rupture. Such ruptures around the ports of cryopreservation bags have been a problem in conventional bags. Existing bags also tend to have leakage problems, particularly at the ends and corners of the bags. Other drawbacks of existing bags include the risk of plastic extractables interacting with the drug substances in the existing storage bags.

US 2016/0030283 A1 discloses a storage bag formed of a composite tube that has an inner surface comprising a higher melting polymer and an outer surface comprising a lower melting polymer. A molded piece having ports is attached to the bag after formation of the composite tube.

A storage bag, particularly for cryogenic applications, having improved durability, reduced leakage, and reduced interaction between plastic extractables and contained drug substances is therefore desirable.

In this specification the following non-SI units are used, which may be converted to the respective SI or metric unit according to the following conversion table:

| *Name of unit* | *Conversion factor* | *SI or metric unit* |
|---|---|---|
| *inch* | *2.54* | *cm* |

### SUMMARY

The invention is defined in the appended claims. In a first aspect, the disclosure is directed to a storage bag that includes a collapsible pouch including an internal volume and an aperture at one end; a non-collapsible port assembly; a port reinforcing laminate overlapping the port assembly and the end of the collapsible pouch including the aperture; and at least one peripheral cavity. The non-collapsible port assembly includes a body that may be elongate in a lateral direction relative to the pouch, and a snout that may be elongate in the longitudinal direction relative to the pouch, and the body includes at least two conduits passing therethrough. The port reinforcing laminate retains the port assembly with the body spaced apart from the collapsible pouch and the snout extending from the body into the internal volume through the aperture. The peripheral cavity is formed by the port reinforcing laminate and a portion of the port assembly and extends from the edge of the collapsible pouch to at least one conduit so the conduit is in fluid communication with the internal volume through the peripheral cavity.

The non-collapsible port includes a plurality of conduits, optionally two conduits, where a first conduit is a filling conduit and a second conduit is an extraction conduit. In certain examples, the non-collapsible port includes a third conduit, where the third conduit may be a sampling conduit. In some embodiments, the filling conduit, the extraction conduit, the sampling conduit, or any combination thereof, extend through the non-collapsible snout. In various examples, at least one conduit is in fluid communication with the internal volume through the non-collapsible snout. In certain embodiments, one or more, e.g., two or more, of the conduits are in fluid communication with the internal volume through the peripheral cavity. In some examples, the port assembly further includes one or more connectors that extend outside the reinforcing laminate for connecting one or more tubes to the port assembly so each tube is in fluid communication with at least one conduit of the port assembly.

In some aspects, the collapsible pouch has an internal surface formed from a first polymer and an external surface formed from a second polymer, and the relative melting points of the first and second polymers are such that the collapsible pouch can be heated to a temperature high enough to melt bond the second polymer without melting the first polymer. In some aspects, the melting point of the first polymer is at least 30 °C higher than the melting point of the second polymer. In various aspects, the collapsible pouch is formed of a multilayered composite material having a layer formed from the first polymer and a layer formed from the second polymer. In some examples, the first polymer is a fluoropolymer, such as polytetrafluoroethylene ("PTFE") or perfluoroalkoxy ("PFA"). In other examples, the first polymer may be a non-fluoropolymer, such as a polyimide (e.g., Kapton^{®}). In some examples, the second polymer is a fluoropolymer, such as fluorinated ethylene propylene ("FEP"), polyvinylidene fluoride ("PVDF"), ethylene tetrafluoroethylene ("ETFE"), or ethylene chlorotrifluoroethylene ("ECTFE"). In other examples, the second polymer may be a non-fluoropolymer. Optionally, the first polymer and the second polymer are both fluoropolymers (e.g., the first polymer is PTFE and the second polymer is FEP). In some examples, the non-collapsible port assembly is formed from a fluoropolymer, such as FEP, PVDF, ETFE, or ECTFE. In other examples, the non-collapsible port assembly may be formed from a non-fluoropolymer.

In certain examples, the reinforcing laminate includes two composite layers, where each layer includes a first surface comprising a third polymer and an opposing second surface comprising a fourth polymer, and the two composite layers are positioned on either side of the port assembly and the collapsible pouch with the second surface of each composite layer in contact with at least a portion of the non-collapsible port assembly and at least a portion of the collapsible pouch. The relative melting points of the third and fourth polymers are such that the composite layers can be heated to a temperature high enough to melt bond the fourth polymer without melting the third polymer. In some aspects, the melting point of the third polymer is at least 30 °C higher than the melting point of the fourth polymer. Optionally, the third polymer is a fluoropolymer, such as PTFE or PFA. Alternatively, the third polymer may be a non-fluoropolymer, such as a polyimide (e.g., Kapton^{®}). Optionally, the fourth polymer is a fluoropolymer, such as FEP, PVDF, ETFE, or ECTFE. In other examples, the fourth polymer may be a non-fluoropolymer. Optionally, the third polymer and the fourth polymer are both fluoropolymers (e.g., the third polymer is PTFE and the fourth polymer is FEP). In some embodiments, the two layers of the port reinforcing laminate are positioned on either side of the port assembly and the end of the collapsible pouch with the fourth polymer in contact with the port assembly and the collapsible pouch. The fourth polymer may bond the two composite layers to an external surface of the collapsible pouch, to the port assembly, and/or to each other. In some examples, the end of the collapsible pouch overlapped by the reinforcing laminate comprises a joint, and the reinforcing laminate covers the joint.

Also provided is a method of forming a storage bag as disclosed herein, the method including providing a collapsible pouch comprising an internal volume and an aperture at one end; providing a non-collapsible port assembly comprising a body and a snout, wherein the body comprises at least two conduits passing therethrough; locating the end of the collapsible pouch including the aperture between two composite layers of a reinforcing laminate, where the two composite layers each including a first surface comprising a fifth polymer and a second surface comprising a sixth polymer, where the end of the collapsible pouch contacts the second surface of each composite layer, and where the relative melting points of the fifth and sixth polymers are such that the composite layers can be heated to a temperature high enough to melt bond the sixth polymer without melting the fifth polymer; melt bonding the port reinforcing laminate to the portion of the collapsible pouch by heating the two composite layers to a temperature between the melting point of the fifth polymer and the melting point of the sixth polymer; locating the port assembly between the two composite layers, where at least a portion of the port assembly contacts the second surface of each composite layer; and melt bonding the port reinforcing laminate to the portion of the port assembly by heating the two composite layers to a temperature between the melting point of the fifth polymer and the melting point of the sixth polymer. In some embodiments, locating the end of the collapsible pouch between the two composite layers and locating the portion of the port assembly between the two composite layers are both carried out before melt bonding the port reinforcing laminate to the portion of the collapsible pouch and to the portion of the port assembly, and melt bonding the port reinforcing laminate to the portion of the collapsible pouch and to the portion of the port assembly are carried out as a single step.

In accordance with the invention, melt bonding the two composite layers to the portion of the port assembly forms at least one peripheral cavity extending from the collapsible pouch to at least one conduit so the at least one conduit is in fluid communication with the internal volume through the peripheral cavity. Optionally, melt bonding the two composite layers to the collapsible pouch and melt bonding the two composite layers to the portion of the port assembly secures the port assembly with the body spaced apart from the collapsible pouch and the snout extending from the body into the internal volume through the aperture.

Also disclosed, but not forming part of the invention, is a storage bag including first, second, and third, composite sheets, where the first composite sheet is in the shape of a collapsible pouch surrounding an internal volume, and where the first composite sheet includes a plurality of edges that overlap or abut at joints to form the collapsible pouch. The collapsible pouch formed by the first composite sheet includes a substantially planar top surface, a substantially planar bottom surface, two opposing sides, and first and second ends, where the sides and ends form a periphery of the collapsible pouch; a lap seam on the top or the bottom surface extending from a point adjacent to the first end to a point adjacent to the second end, where the lap seam includes two opposing edges of the first composite sheet that overlap; a first series of joints on the top or the bottom surface and adjacent to the first end, where the first series of joints includes a first plurality of edges of the first composite sheet that abut; and a second series of joints on the top or the bottom surface and adjacent to the second end, where the second series of joints includes a second plurality of edges of the first composite sheet that abut. The second composite sheet is disposed across the first series of joints to form a first series of lap seams; the third composite sheet is disposed across the second series of joints to form a second series of lap seams; and the first end of the collapsible pouch includes at least one aperture having an area. In some aspects, the at least one aperture has an area greater than 0.11 square inches. In some aspects, the sum of the areas of all of the apertures is less than 0.55 square inches.

### BRIEF DESCRIPTION OF THE DRAWINGS

The accompanying drawings are included to provide a further understanding of the disclosure and constitute a part of this specification, illustrate embodiments, and together with the description serve to explain the principles of the disclosure. The terms "disclosure," "the disclosure," "this disclosure" and "the present disclosure," as used in this document, are intended to refer broadly to all of the subject matter disclosed in this patent application and the claims below.
FIG. 1A is a partial front view of a storage bag according to some embodiments. FIG. 1B is a cross-sectional view across line 1B-1B of FIG. 1A. FIG. 1C is a cross-sectional view across line 1C-1C of FIG. 1A. FIG. 1D is a cross-sectional view across line 1C-1C of an alternate aspect.
FIG. 2 is a top view of a storage bag according to some embodiments .
FIG. 3 is a top view of a storage bag according to some embodiments.
FIG. 4 is a top view of a flat composite sheet used to form a collapsible pouch of a storage bag according to some embodiments .
FIG. 5 is a perspective view of a composite tube formed from the flat composite sheet of FIG. 4 and used to form a collapsible pouch of a storage bag according to some embodiments.
FIG. 6 is a perspective view of the composite tube of FIG. 5 in a flattened configuration.
FIG. 7A is a perspective view of a reinforcing laminate according to some embodiments, and FIG. 7B is a top view of a partially assembled storage bag formed from the composite tube of FIGs. 5-6 and the reinforcing laminate of FIG. 7A.
FIGs. 8A is a perspective view of a port reinforcing laminate according to some embodiments, and FIG. 8B is a top view of a partially assembled storage bag formed from the composite tube of FIGs. 5-6, the reinforcing laminate of FIG. 7A, and the port reinforcing laminate of FIG. 8A. FIG. 8C is a top view of a storage bag according the an exemplary embodiment.
FIG. 9A is a partial perspective view of the storage bag of FIG. 8C with the reinforcing laminate omitted, where the storage bag is empty. FIG. 9B is a partial perspective view of the storage bag of FIG. 9A where the storage bag contains a fluid.
FIG. 10A is a partial perspective view of a prior art storage bag, where the storage bag is empty. FIG. 10B is a partial perspective view of the prior art storage bag of FIG. 10A, where the storage bag contains a fluid .

### DETAILED DESCRIPTION

Persons skilled in the art will readily appreciate that various aspects of the present disclosure can be realized by any number of methods and apparatus configured to perform the intended functions. It should also be noted that the accompanying drawing figures referred to herein are not necessarily drawn to scale, but may be exaggerated to illustrate various aspects of the present disclosure, and in that regard, the figures should not be construed as limiting.

Described herein are storage bags, such as cryopreservation bags, and methods of making the bags. Generally, the bags are used to freeze, store, and transport biologic materials. For example, a fluid including a biologic material may be introduced to the bag through a conduit and then frozen for storage and/or transport, after which the fluid may be thawed and extracted from the bag through the same or a different conduit.

The storage bags described herein advantageously limit the volume of fluid in the port area of the bag to minimize or even prevent fluid expansion that is extensive enough to cause delamination failures. Generally the bags include a collapsible pouch having an internal volume where the fluid is contained and at least one aperture through which fluid can be introduced and extracted. The structure of the storage bags as described herein allows efficient filling and draining even with an aperture smaller than that of known storage bags. Optionally, the aperture has an area greater than 0.11 square inches. In some aspects, each aperture has an area and the sum of the areas of all of the apertures is less than 0.55 square inches. In addition to the pouch, the bags include a separate non-collapsible port assembly outside the pouch but fluidly connected thereto. In some aspects, the non-collapsible port assembly includes a body that may be elongate in a lateral direction relative to the pouch, and a snout that may be elongate in the longitudinal direction relative to the pouch, and the body includes one or more conduits passing therethrough. The collapsible pouch and non-collapsible port assembly are sandwiched between layers of a port reinforcing laminate that maintains a desired position of the port assembly relative to the pouch with the body spaced apart from the pouch and the snout contacting the aperture or extending through the aperture into the internal volume of the pouch. The port reinforcing laminate and a portion of the port assembly define a peripheral cavity adjacent to the port assembly and between two layers of the laminate. In some examples, the peripheral cavity extends from the pouch to the conduit(s) in the body, and the conduit(s) are in fluid communication with the internal volume through the peripheral cavity. The small volume of the peripheral cavity results in low stress on seams in the port area because the small volume of fluid has little change in volume upon freezing, and thus low change in stress on the seams, during the freeze cycle. This minimizes or even prevents delamination failures at the port that might otherwise be caused by expansion of trapped fluid when freezing. Moreover, the structure and materials of the bags (including the pouch, the port assembly, and the laminate) provide improved durability, reduced leakage, and reduced interaction between plastic extractables and drug substances stored in the bags.

As used herein, "high melting polymer" and "higher melting polymer" mean a polymer that does not melt when heated to a temperature high enough to melt bond another polymer referred to herein as a "low melting polymer" or "lower melting polymer." In some embodiments, the "high melting polymer" or "higher melting polymer" is a polymer having a melting point that is from about 30°C to about 80°C greater than a melting point the "low melting polymer" or "lower melting polymer." Conversely, the "low melting polymer" or "lower melting polymer" means a polymer that can be melt bonded at a temperature where the "high melting polymer" or "higher melting polymer" does not melt. In some embodiments, the "low melting polymer" or "lower melting polymer" is a polymer having a melting point that is from about 30°C to about 80°C less than the melting point of the "high melting polymer" or "higher melting polymer."

As used herein, "joint" means an interface that includes two abutting edges, edges that are in near abutment, or edges that overlap. "Lap seam" as used herein means a seam having edges that overlap one another.

"Cryopreservation" as used herein means storage or preservation at temperatures below 0 °C.

"Collapsible" as used herein means a material or component easily changes shape, for example flattens, under an applied force. "Non-collapsible" as used herein means a material retains its shape under an applied force.

A storage bag disclosed herein includes a collapsible pouch with an internal volume and an aperture (i.e., an opening), a non-collapsible port assembly, and a port reinforcing laminate that is a composite sheet that overlaps, bonds to, and maintains the relative spacing of the pouch and the port assembly. The port reinforcing laminate includes two layers, where the two layers are positioned on opposite sides of the collapsible pouch, on opposite sides of the aperture, and on opposite sides of the non-collapsible port assembly. The non-collapsible port assembly includes a body that may be elongate in a lateral direction relative to the pouch, and a snout that may be elongate in the longitudinal direction relative to the pouch. In some examples, the port assembly and the end of the pouch lie between layers of the reinforcing laminate with the snout extending into the internal volume of the collapsible pouch through the aperture and the body spaced apart from the pouch. In various aspects, the body includes at least one conduit that is in fluid communication with the internal volume of the pouch through a peripheral cavity formed by a portion of the snout (e.g., a side portion of the snout) and layers of the reinforcing laminate. In some examples, a storage bag may include more than one reinforcing laminate, for example one containing the port assembly and maintaining its spacing relative to the collapsible pouch and another in a different location that may include a handle. When a reinforcing laminate contains the port assembly, it is referred to herein as a port reinforcing laminate. When a reinforcing laminate contains a handle, it may be referred to herein as a handle reinforcing laminate to distinguish it from the port reinforcing laminate.

In some embodiments, the collapsible pouch is formed from a polymer material that remains durable even at very low temperatures and that also has a low level of extractables. The durable polymer with low extractables may be a first polymer in a composite material that also includes a second polymer that facilitates construction of the bag, for example by having a lower melting point. In some aspects, first polymer forms the inner surface of the pouch and the second polymer forms the exterior surface of the pouch. Optionally, the first polymer forms the entire inner surface of the collapsible pouch, so a contained fluid contacts only the first polymer and not the second polymer. For example, the first polymer may form a continuous layer on the inner surface of the collapsible pouch. The first polymer provides durability to the storage bag, so even at extremely low temperatures the storage bag does not shatter when dropped. The second polymer may have any properties desired for facilitating construction of the bag because the first polymer prevents the second polymer from coming into contact with the contents of the pouch, thereby preventing and/or inhibiting interaction between the contents of the bag and any plastic extractables in the second polymer. Optionally, the first polymer is a fluoropolymer, such as PTFE or PFA. In other examples, the first polymer may be a non-fluoropolymer, such as a polyimide (e.g., Kapton^{®}). Optionally, the second polymer is a fluoropolymer, such as FEP, PVDF, ETFE, or ECTFE. In other examples, the second polymer may be a non-fluoropolymer. Optionally, the first polymer and the second polymer are both fluoropolymers (e.g., the first polymer is PTFE and the second polymer is FEP).

In some embodiments, the collapsible pouch of the storage bags disclosed herein includes an internal surface formed from a first polymer and an external surface formed from a second polymer, wherein the relative melting points of the first and second polymers are such that the collapsible pouch can be heated to a temperature high enough to melt bond the second polymer without melting the first polymer. In some aspects, the melting point of the first polymer is at least 30 °C higher (e.g., at least 50 °C, or at least 80 °C higher) than the melting point of the second polymer.

In some embodiments, a reinforcing laminate includes two layers formed from one or more sheets, where one sheet may be folded to form the two layers or two sheets may be stacked to form the two layers. In some embodiments, the sheet(s) are composite materials, each having a first side and a second side, where the first side is formed from a third polymer and the second side is formed from a fourth polymer, wherein the relative melting points of the third and fourth polymers are such that the reinforcing laminate can be heated to a temperature high enough to melt bond the fourth polymer without melting the third polymer. In some aspects, the melting point of the third polymer is at least 30 °C higher (e.g., at least 50 °C, or at least 80 °C higher) than the melting point of the fourth polymer. Optionally, the third polymer is a fluoropolymer, such as PTFE or PFA. In other examples, the third polymer may be a non-fluoropolymer, such as a polyimide (e.g., Kapton^{®}). Optionally, the fourth polymer is a fluoropolymer, such as FEP, PVDF, ETFE, or ECTFE. In other examples, the fourth polymer may be a non-fluoropolymer. Optionally, the third polymer and the fourth polymer are both fluoropolymers (e.g., the third polymer is PTFE and the fourth polymer is FEP). The third and fourth polymers may be the same as the first and second polymers described above for the collapsible pouch, or they may be different.

The two layers of a port reinforcing laminate are disposed on opposing sides of the pouch and the port assembly such that the second side (i.e., the low melting polymer side) of each layer faces the pouch and the port assembly, and the low melting polymer can bond with the pouch and at least a portion of the port assembly when heat is applied. Bonding the port reinforcing laminate to the pouch can be carried out in the same step or in a separate step from bonding the port reinforcing laminate to the port assembly. In some embodiments, to bond the port reinforcing laminate to the pouch and/or the port assembly, the port reinforcing laminate is raised to a temperature between the melting temperature of the third polymer and the melting temperature of the fourth polymer. When the outer surface of the pouch is formed from a polymer having a sufficiently low melting point, that polymer can contribute to the bonding between the pouch and the port reinforcing laminate. When the outer surface of the port assembly is formed from a polymer having a sufficiently low melting point, that polymer can contribute to the bonding between the port assembly and the port reinforcing laminate. Moreover, when a port reinforcing laminate is disposed over a joint or seam between two materials that form the collapsible pouch, the reinforcing laminate can seal the joint or reinforce the seal of the seam. Reinforcing laminates other than the port reinforcing laminate may be used to seal other joints or reinforce other seams and/or for other purposes, such as to incorporate a handle.

In some aspects, the two composite layers of a reinforcing laminate are formed from a single composite sheet that is folded over. In other embodiments, the two composite layers of a reinforcing laminate are two separate composite sheets, where one sheet is disposed on each side of the collapsible pouch. The reinforcing laminate provides enhanced leak protection at the ends and the corners of the storage bag and provides additional strength to the storage bag, particularly when the fluid in the storage bag is frozen.

In the region of the port reinforcing laminate between the port body and the collapsible pouch, the two composite layers can bond with each other when heat is applied. The composite layers, however, do not contact each other in a region immediately adjacent to the port assembly, so they do not bond in that region. Rather, the region immediately adjacent the snout remains open, forming a peripheral cavity. Thus, in some embodiments, at least one peripheral cavity is provided adjacent a side of the port assembly and extends from the collapsible pouch to a conduit of the port assembly such that the conduit is in fluid communication with the interior volume of the collapsible pouch through the peripheral cavity. In some embodiments, the port reinforcing laminate bonds to the body of the port assembly and to the snout, forming two peripheral cavities with one on either side of the snout. In other embodiments, the port reinforcing laminate bonds to the body of the port assembly, but does not bind to the snout or does not bind to all of the snout, forming one peripheral cavity that extends from one side of the snout to the other, including above and/or below the snout where the port reinforcing laminate is not bonded to the snout. In some aspects, multiple peripheral cavities are provided, e.g., on opposing sides of the snout, in which case each peripheral cavity may be in fluid communication with a separate conduit or conduits in the body of the port assembly.

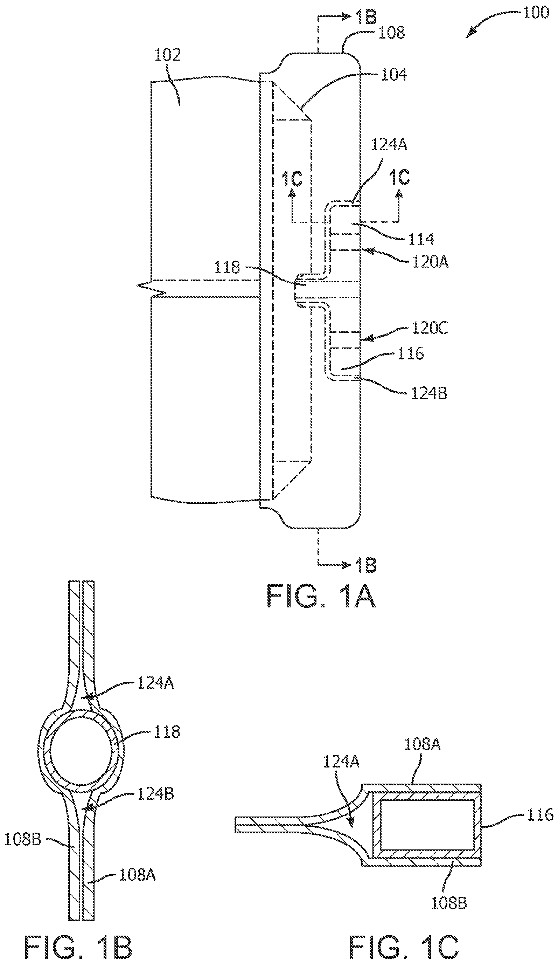

Fig. 1A illustrates a partial top view of storage bag 100. Fig. 1B is a cross-sectional view along lines 1B-1B of Fig. 1A. Fig. 1C is a cross-sectional view along lines 1C-1C of Fig. 1A. The body 116 of the non-collapsible port assembly 114 includes two conduits 120A, 120C and is retained in the port reinforcing laminate 108. The body 116 is spaced apart from the collapsible pouch 102. The snout 118 extends from the body 116 into the interior volume of the collapsible pouch 102. At least a portion of the snout 118 extends between the layers 108A, 108B of the port reinforcing laminate 108.

The port reinforcing laminate 108 includes first and second composite layers 108A, 108B that are bonded to the collapsible pouch 102 where the layers 108A, 108B contact the collapsible pouch 102 and bonded the port assembly 114 where the layers 108A, and 108B contact the port assembly. The layers 108A, 108B are bonded to each other between the collapsible pouch 102 and port assembly 114, except at the peripheral cavity 124 (or 124A, 124B), where the layers 108A, 108B are spaced apart from each other.

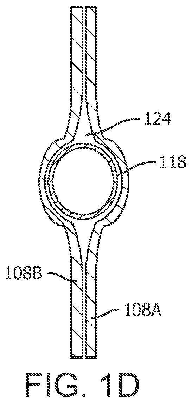

Fig. 1B illustrates a portion of the two distinct peripheral cavities 124A, 124B formed by the snout 118 and the first and second composite layers 108A, 108B when the first and second composite layers are bonded to the top and bottom of the snout. Fig. 1C illustrates a portion of the peripheral cavity 124A formed by the body 116 and the first and second composite layers 108A, 108B. FIG. 1D illustrates a portion of the single peripheral cavity 124 formed by the snout 118 and the first and second composite layers 108A, 108B when the first and second composite layers are not bonded to the top or the bottom of the snout. The single cavity 124 includes open regions on either side of the snout that are in fluid communication through one or more passages defined above and/or below the snout 118.

The size of a peripheral cavity 124 can be adjusted to control the volume of fluid permitted in the peripheral cavity 124. Through use of the peripheral cavity 124 and the non-collapsible snout 118, the volume of fluid trapped between the collapsible pouch 102 and the non-collapsible port assembly 114 is limited, and as such this area advantageously experiences limited expansion during freezing. In addition, the non-collapsible snout 118 inhibits or even prevents film collapse and allows unrestricted flow into and out of the collapsible pouch through the non-collapsible port assembly.

In some embodiments, the non-collapsible port assembly 114 may include one conduit, two conduits, three conduits, or more than three conduits. In various embodiments, the conduit(s) may extend through the body, through the snout, or a combination thereof. For example, a conduit may be defined through the snout with other conduits defined through the body 116; all of the conduits may be defined through the body 116; all of the conduits may be defined through the snout 118; or more than one conduit may be defined through the snout 118 with one or more other conduits defined through the body 116. Various other arrangements of conduits may be provided and are considered to be within the purview of the current disclosure.

In some embodiments, one of the conduits of the non-collapsible port assembly is a filling conduit and another of the conduits is an extraction conduit. In some optional embodiments, one of the conduits is a sampling conduit; however, in other examples, the sampling conduit may be omitted. The filling conduit, extraction conduit, and optionally the sampling conduit may be arranged (e.g., through the body and/or through the snout) in any way desired, and such arrangement should not be considered limiting on the current disclosure.

Each conduit may include one or more tubes disposed in or through the conduit for providing material to or extracting material from the collapsible pouch 102. Alternatively, the port assembly 114 may include connectors that extend outside the reinforcing laminate to connect tubes to the conduits. In some embodiments, the storage bag 100 may include a filling tube, through which liquids can enter the internal volume, and an extraction tube, through which liquids can be extracted from the internal volume. Optionally, the storage bag may include a sampling tube through which samples can be extracted during filling, freezing, storage, transportation, or extraction. Optionally, the sampling tube is in fluid communication with the internal volume of the collapsible pouch 102 through the body 116 and the snout 118 that extends into the interior volume of the pouch.

Optionally, a second reinforcing laminate may be provided at a different location on the collapsible pouch. In some examples, a second reinforcing laminate is provided at the end opposite the aperture. In some aspects, this additional reinforcing laminate may include a slit or another opening therein that can be used as a handle to facilitate transporting the pouch. This reinforcing laminate may be referred to as a handle reinforcing laminate. Optionally, the handle reinforcing laminate is substantially similar to the port reinforcing laminate. For example, the handle reinforcing laminate may include two composite layers, each having a first side and a second side, where the first side includes a higher melting polymer and the second side includes a lower melting polymer. Also like the port reinforcing laminate, in some embodiments, the two composite layers of the handle reinforcing laminate are formed from a single sheet that is folded over a portion of the collapsible pouch. In other embodiments, the two composite layers of the handle reinforcing laminate are two separate composite sheets, where one is disposed on each side of the collapsible pouch and each sheet is arranged with the lower melting second side facing the collapsible pouch. Optionally the handle reinforcing laminate and the port reinforcing laminate provide enhanced leak protection at ends and corners of the storage bag and provide additional strength to the storage bag, particularly when the storage bag is frozen.

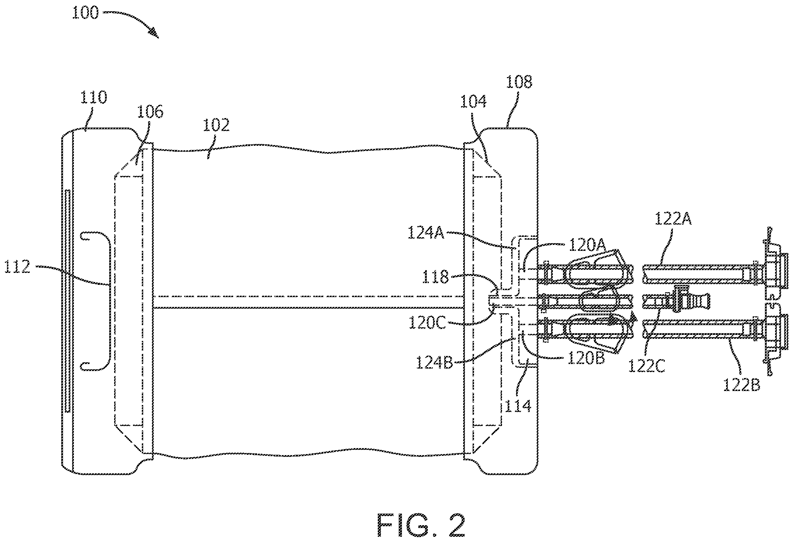

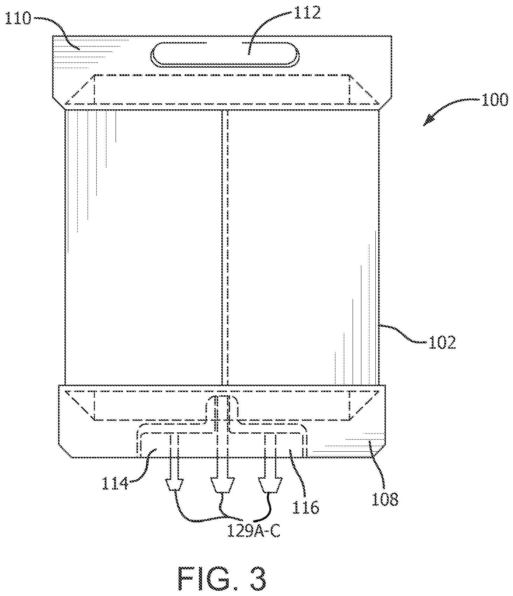

FIGs. 2 and 3 illustrate an embodiment of a storage bag 100. Elements in common with FIGs 1A-C retain the same numbering. The collapsible pouch 102 includes a first end 104, and a port reinforcing laminate 108 overlaps the first end 104. Optionally, the collapsible pouch 102 also includes a handle reinforcing laminate 110 that overlaps a second end 106 and includes a handle 112.

In the example illustrated in FIGs. 2 and 3, the non-collapsible port assembly 114 includes three conduits 120A-C, three connectors 129A-C, and three tubes 122A-C disposed over the three connectors 129A-C. FIG. 3 omits the tubes so the connectors 129A-C are more clearly visible. In the example illustrated in FIGs. 2 and 3, the conduits 120A and 120B are defined through the body 116 and the conduit 120C is defined through the snout 118. As an example only, one of the conduits 120 (e.g. conduit 120A) of the non-collapsible port assembly 114 may be a filling conduit, another of the conduits 120 (e.g., conduit 120C) may be an extraction conduit, and another of the conduits 120 (e.g., conduit 120C) may be a sampling conduit. The arrangement of the filling conduit, extraction conduit, and optionally the sampling conduit within the storage bag should not be considered limiting on the current disclosure. The port assembly 114 may have a substantially T-shape, as shown in FIGs. 2-3, with a single snout positioned perpendicular to and centered on the body. Alternatively, however, the port assembly 114 may have any convenient or desired shape including an off-set snout (e,g., a snout that is not centered on the body), a snout that is angled with respect to the body (i.e., not perpendiculars to the body), or multiple snouts.

In the example illustrated in FIGs. 1-3, peripheral cavities 124A, 124B are adjacent to opposing side portions of the non-collapsible port assembly 114. The peripheral cavities 124A, 124B extend from the aperture of the collapsible pouch 102 to the body 116 of the non-collapsible port assembly such that at least one of the conduits of the non-collapsible port assembly 114 is in fluid communication with the interior volume of the collapsible pouch 102 through the peripheral cavities 124A, 124B. In this embodiment, the conduit 120A is in fluid communication with the interior volume of the collapsible pouch 102 through the peripheral cavity 124A, the conduit 120B is in fluid communication with the interior volume of the collapsible pouch 102 through the peripheral cavity 124B, and the conduit 120C is in fluid communication with the interior volume through the snout 118. It will be appreciated that the number and/or location of the peripheral cavities 124A, 124B may be adjusted depending on the number and/or location of the conduits 120.

In some examples, the collapsible pouch portion of the storage bag is formed from a flat sheet by rolling the flat sheet into a tube, joining two opposing edges of the sheet, and then sealing the tube at both ends. Optionally the flat sheet is a composite sheet, having a first surface that includes a first polymer and a second opposing surface that includes a second polymer that has a lower melting point than the first polymer, as described in detail above. The tube and collapsible pouch are formed with the first surface of the composite sheet as the internal surface of the tube and collapsible pouch and with the second surface of the composite sheet as the external surface of the tube and collapsible pouch. That is, the higher melting polymer forms the internal surface of the tube and the collapsible pouch and the lower melting polymer of the composite sheet forms the external surface of the tube and the collapsible pouch. The higher melting polymer imparts the beneficial properties of durability and low extractables discussed above, and the lower melting polymer facilitates construction of the tube, the collapsible pouch, and the storage bag, because it can be softened or melted to form bonds. In some examples, the higher melting polymer is a non-melt processible polymer including, but not limited to, PTFE, PFA, or a polyimide such as Kapton^{®}. In various examples, the lower melting polymer is a melt processible polymer including, but not limited to, FEP, PVDF, ETFE, or ECTFE.

In some aspects, a flat composite sheet is formed into a composite tube by joining two opposing edges of the composite sheet, optionally by overlapping the edges. The composite sheet is oriented with the first surface/higher melting polymer toward the inside of the tube and the second surface/lower melting polymer toward the outside of the tube. In some examples, the overlapping edges are joined together by heating the composite material to a temperature between the melting points of the lower melting polymer and the higher melting polymer, so that the lower melting polymer softens or melts but the higher melting polymer does not, applying pressure where the edges overlap, and allowing the lower melting polymer to solidify. Thus the overlapping edges form a lap seam.

After the opposing edges are joined to form the tube, the tube is flattened to form a top portion and a bottom portion with the lap seam that joins the opposing edges extending along the top or bottom portion of the tube from one end to another. Optionally, the lap seam extends substantially along the center of the top or bottom portion of the tube from one end to the other. In some examples, the lap seam does not form an edge of the flattened tube (along a periphery of the flattened tube) between the top and bottom portions.

In some examples, the flat composite sheet has a substantially rectangular shape, and optionally the two opposing edges to be joined are substantially straight. Once the opposing edges are joined, the other edges of the composite sheet each form an end of the composite tube. The edges forming the ends of the tube may include one or more extensions, for example, one or more flaps or contoured portions, for use in closing the ends of the tube to form the collapsible pouch. In some examples, the extensions on the composite sheet are shaped and sized so that once the tube is formed and flattened, the extensions are along only one of the top or bottom portion of each end. Thus, the ends of the top and bottom portions of the tube are off-set.

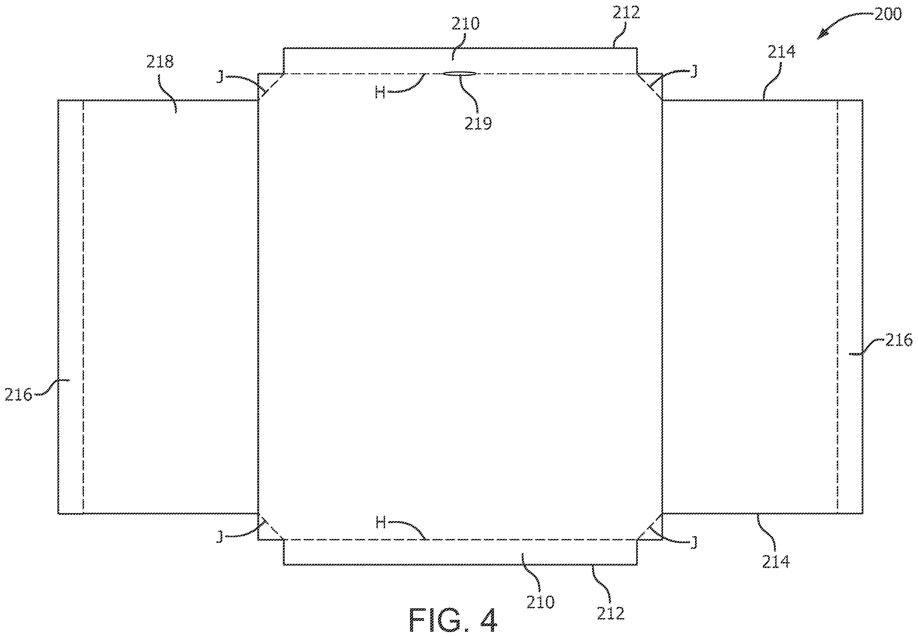

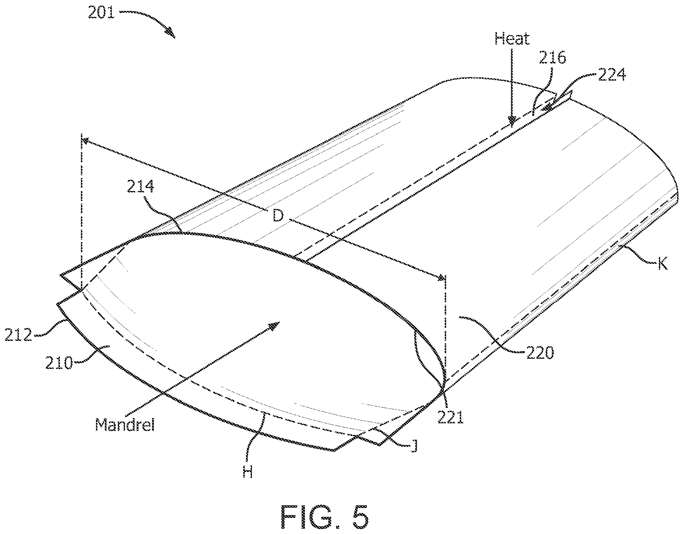

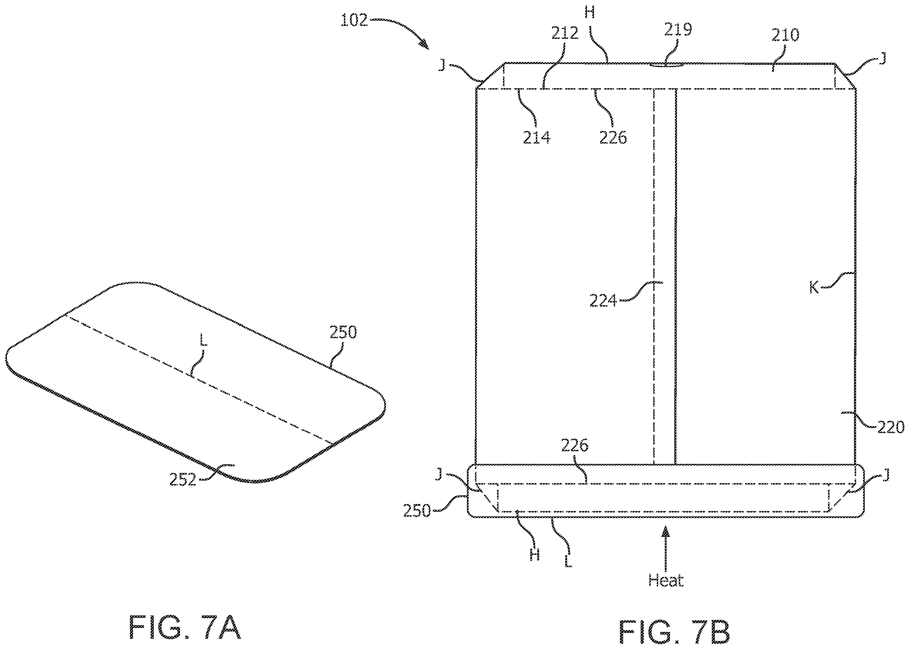

As shown in FIG. 4, composite sheet 200 has a first surface 218 comprising a higher melting polymer. The first surface 218 will become the inner surface of the collapsible pouch 102 (shown in FIG. 7B). The composite sheet 200 further includes a second surface (not shown) opposite the first surface 218. The second surface includes a lower melting polymer, and the second surface will become the outer surface of the collapsible pouch 102. The composite sheet 200 is substantially rectangular with two extensions 210 on opposing sides having extension edges 212. Fold lines J and H indicate where extensions 210 will be folded to close the ends of the collapsible pouch 102. One of the fold lines H includes an aperture 219. The aperture may be any convenient shape, including circular, oval, or any other desired shape. Opposing side portions 216 of the composite sheet 200 will overlap when the composite sheet is rolled to form composite tube 201 (shown in FIG. 5). When the opposing side portions 216 are joined and the tube is flattened, extension edges 212 are offset compared to the non-extended edges 214. It should be understood that the specific geometry of extensions 210 is provided as an example only, other geometries are possible, and the exact extension geometry illustrated should not be considered limiting on the present disclosure.

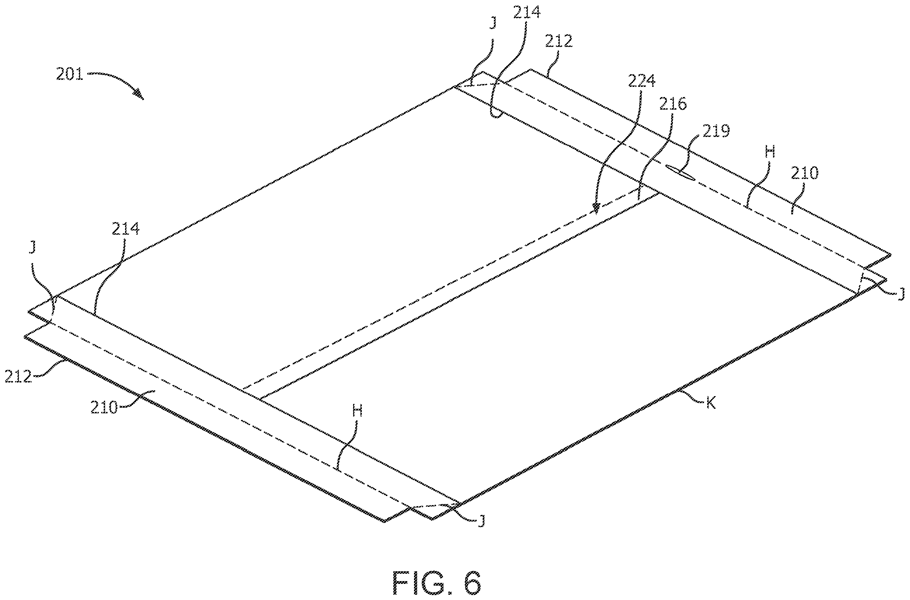

FIGs. 5-6 show the formation of composite tube 201. FIG. 5 shows the composite sheet 200 formed into a ring, optionally around a mandrel, until opposing side portions 216 overlap. The composite tube 201 is formed with the first surface 218 (higher melting polymer) of the composite sheet 200 as the internal surface 221 of the composite tube 201 and the second surface (lower melting polymer) of the composite sheet 200 as the external surface 220 of the composite tube 201. Once overlapped, opposing side portions 216 are heated to melt bond the lower melting polymer of the external surface 220 to the higher melting polymer of internal surface 221, forming a lap seam 224. After forming the lap seam 224, tube 201 is flattened in a direction perpendicular to diameter D by folding along line K. FIG. 6 shows the composite tube 201 flattened prior to folding the extensions 210 to close the ends of the tube 201. The extension edges 212 are off-set compared to the non-extended edges 214.

An end of the tube may be sealed by folding an extension so the edge of the extension abuts or overlaps the edge of the non-extended portion of the tube end to form a joint. In some embodiments the extension is folded along a fold line intermediate between the edge of the extension and the edge of the opposing top or bottom portion of the tube. That is, the fold line is within the extension, so that after the extension is folded the joint with the non-extended portion is on the top or bottom of the collapsible pouch, not at the periphery. In some embodiments, an extension is divided into multiple sections, for example three sections, with different geometries and different fold lines to facilitate folding required to join the top and bottom portions and seal an end of the tube. Each section of an extension can be folded such that the edges of that section abut or overlap another section or abut or overlap the opposing portion of the flattened tube to form a joint.

FIG. 7A shows a first reinforcing laminate 250 that is placed over an end of the collapsible pouch 102, as shown in FIG. 7B. The first reinforcing laminate 250 has a first surface (not shown) including a high melt polymer and a second surface 252 opposite the first surface, where the second surface includes a low melt polymer. As shown in FIG. 7B, extensions 210 are folded on lines J and H to form the collapsible pouch 102 before placement of the first reinforcing laminate 250. Once the extensions are folded, the extension edges 212 and the non-extended edges 214 form a joint 226 on the top (upward facing) portion of the flat collapsible pouch 102. FIG. 7B shows the extension edges 212 and the non-extended edges 214 abutting, but alternatively they could overlap. FIG. 7B further shows the first reinforcing laminate 250 folded along line L and placed around an end of collapsible pouch 102 and over joint 226 (i.e., the end of pouch 102 is sandwiched between the two layers of folded first reinforcing laminate 250) with the second surface 252/lower melt polymer on the inside of the folded first reinforcing laminate 250 adjacent to the external surface of the flattened collapsible pouch 102. Heat is applied to the first reinforcing laminate 250 to melt bond the lower melting polymer of surface 220 and/or surface 252 and secure joint 226. It should be understood that in some embodiments, first reinforcing laminate 250 could be formed of only higher melting polymer and could be bonded with surface 220 by melt bonding the lower melting polymer of surface 220 to first reinforcing laminate 250. Also, in alternative embodiments the first reinforcing laminate 250 could be a flat (unfolded) sheet that is applied only over the side of the composite pouch 102 including joint 226. Still further, rather than a folded sheet, the first reinforcing laminate 250 could be two separate sheets with one on each side of the collapsible pouch 102.

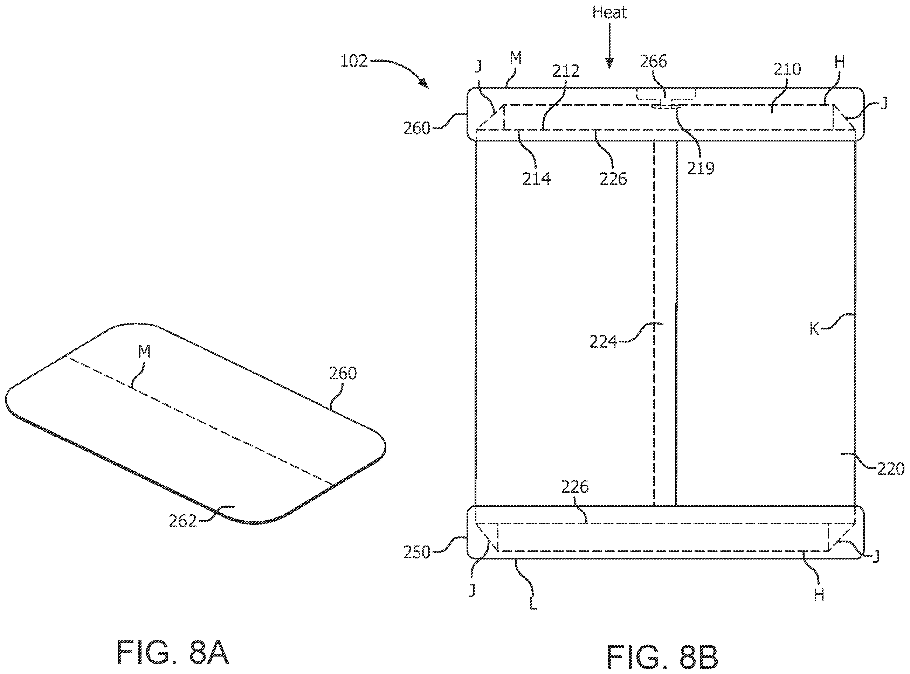

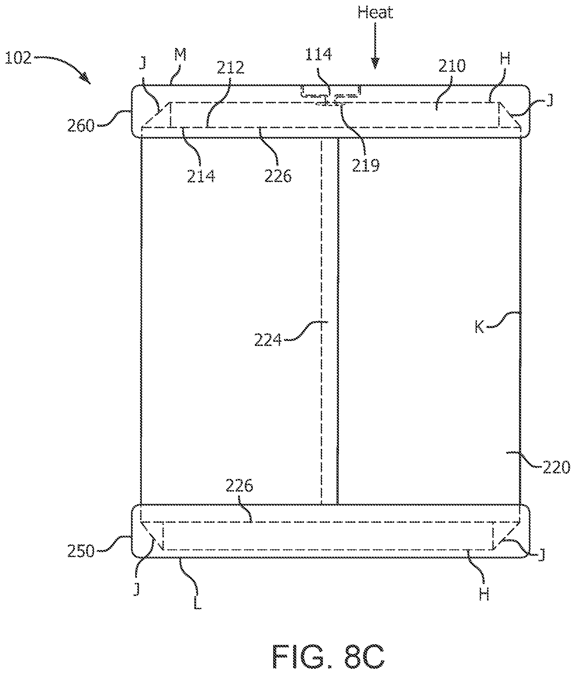

FIG. 8A shows a second (or port) reinforcing laminate 260 that is placed over the other end of the collapsible pouch 102 as shown in FIG. 8B. The port reinforcing laminate 260 has a first surface (not shown) including a higher melting polymer and a second surface 262 opposite the first surface, where the second surface 262 includes a lower melting polymer. As shown in FIG. 8B, extensions 210 are folded on lines J and H to form the collapsible pouch 102 as described for FIG. 7B. FIG. 8B further shows the port reinforcing laminate 260 folded along line M and placed around an end of collapsible pouch 102 and over joint 226 (i.e., the end of pouch 102 is sandwiched between the two layers of folded port reinforcing laminate 260) with the second surface 262/lower melt polymer on the inside of the folded port reinforcing laminate 260 adjacent to the external surface of the flattened collapsible pouch 102.

An insert 266 is shown between the folded layers of the port reinforcing laminate 260. The insert 266 may be placed before or after the port reinforcing laminate 260 is folded and before or after the port reinforcing laminate 260 is placed over the end of the collapsible pouch 102. The insert 266 prevents the port reinforcing laminate from bonding to anything in the area where the insert 266 is present. Heat is applied to the port reinforcing laminate 260 to melt bond the lower melting polymers of surface 220 and/or surface 262 and secure joint 226. The insert 266 is made from a material that does not bond to the port reinforcing laminate, for example polytetrafluoroethylene. After the port reinforcing laminate 260 is bonded to the collapsible pouch 102, the outer edge of the folded port reinforcing laminate 260 is cut to provide access to the insert 266, the insert 266 is removed, and a port assembly 114 (not shown in FIG. 8B) is inserted between the layers of the port reinforcing laminate 260. The port assembly 114 optionally may be substantially the same size and shape as the insert 266, but it need not be. In a second heating step, heat is applied so the lower melting polymer of the reinforcing laminate 260 and/or a lower melting polymer on a surface of the port assembly 114 will melt bond the port reinforcing laminate 260 to at least a portion of the port assembly 114.

As explained above for the first reinforcing laminate 250, it should be understood that in some embodiments, port reinforcing laminate 260 could be formed of only higher melting polymer and could be bonded with surface 220 and the surface of the port assembly by melt bonding those surfaces to port reinforcing laminate 260. Also, in alternative embodiments the port reinforcing laminate 260 could be a flat (unfolded) sheet that is applied only over the side of the composite pouch 102 including joint 226. Still further, rather than a folded sheet, the port reinforcing laminate 260 could be two separate sheets with one on each side of the collapsible pouch 102.

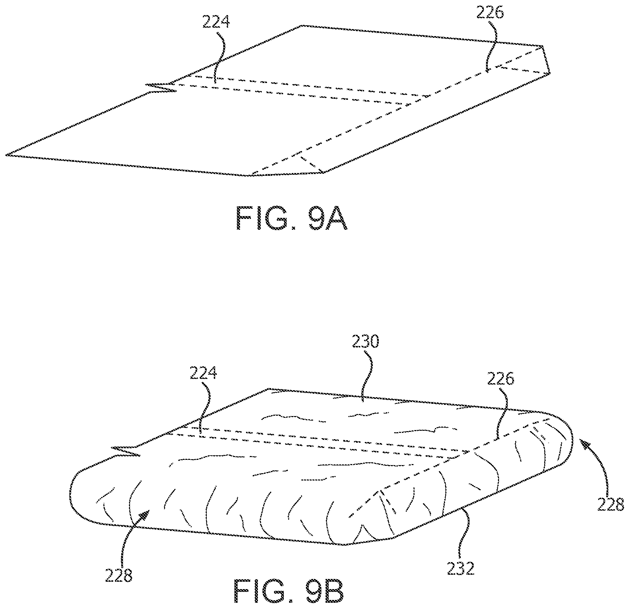

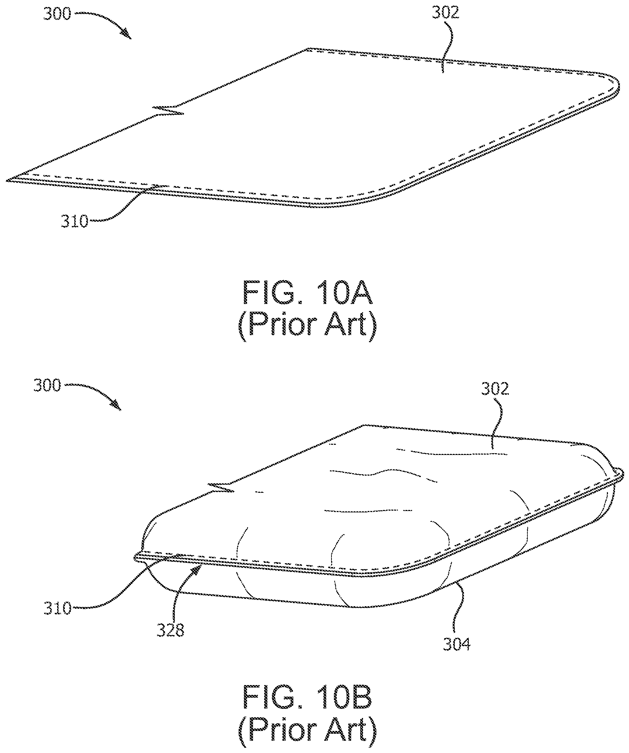

Folding the extensions at each end of the pouch so the edges of the extensions abut or overlap the non-extended edges and bonding those joints to first or second composite sheets forms a pouch having lap seams only. Lap seams result in a stronger construction since the joints/seams are subject to shear stress during freezing (or volume expansion of the bag) which has a lower failure mode when compared to joints/seams that are subject to peel or cleavage stress. This construction creates a more durable pouch as compared to prior art storage bags, which have joints/seams that are subject to peel or cleavage stress but not sheer stress. FIGs. 9A-9B show partial perspective views of collapsible pouch 102 with the first reinforcing laminate 250 omitted. FIG. 9A shows the pouch 102 empty and flat, and FIG 9B shows the pouch 102 at least partially filled with a fluid. The periphery 228 of the pouch 102 is a continuous film, and the lap seam 224 and joint 226 on the top of the bag. As shown in other figures, in use, the lap seam 224 and joint 226 are covered by the first reinforcing laminate 250. For comparison, FIGs. 10A-10B show partial perspective views of a prior art bag 300, where the bag is formed from two materials joined together by a seam around at least a portion of the bag's periphery 310.

The application has been described above both generically and with regard to specific embodiments. It will be apparent to those skilled in the art that various modifications and variations can be made in the embodiments without departing from the scope of the invention as defined in the appended claims .

## Claims

1. A storage bag (100), comprising:
a collapsible pouch (102) comprising an internal volume and an aperture at one end;
a non-collapsible port assembly comprising a body (116) and a snout (118), wherein the body comprises at least two conduits (120A, 120C) passing therethrough;
a port reinforcing laminate (108) overlapping the port assembly and the end of the collapsible pouch including the aperture to retain the port assembly with the body spaced apart from the collapsible pouch and the snout extending from the body into the internal volume through the aperture; and
at least one peripheral cavity (124) formed by the port reinforcing laminate and a portion of the port assembly and extending from the aperture of the collapsible pouch to at least one conduit so the at least one conduit is in fluid communication with the internal volume through the peripheral cavity.

2. The storage bag of claim 1, wherein one of the at least two conduits is a filling conduit and another one of the at least two conduits is an extraction conduit.

3. The storage bag of claim 1 or 2, wherein the body of the non-collapsible port assembly further comprises a sampling conduit.

4. The storage bag of any preceding claim, wherein two or more of the at least two conduits are in fluid communication with the internal volume through the at least one peripheral cavity and the aperture.

5. The storage bag of any preceding claim, wherein at least one of the at least two conduits is in fluid communication with the internal volume through the non-collapsible snout.

6. The storage bag of any preceding claim, wherein the port assembly further comprises one or more connectors that extend outside the port reinforcing laminate for connecting one or more tubes to the port assembly so each tube is in fluid communication with at least one conduit of the port assembly.

7. The storage bag of any preceding claim, wherein the collapsible pouch comprises an internal surface formed from a first polymer and an external surface formed from a second polymer, wherein the relative melting points of the first and second polymers are such that the collapsible pouch can be heated to a temperature high enough to melt bond the second polymer without melting the first polymer; and optionally
wherein the melting point of the first polymer is at least 30 °C higher than the melting point of the second polymer.

8. The storage bag of claim 7, wherein the first polymer comprises polytetrafluoroethylene ("PTFE") or perfluoroalkoxy ("PFA") and the second polymer comprises fluorinated ethylene propylene ("FEP"), polyvinylidene fluoride ("PVDF"), ethylene tetrafluoroethylene ("ETFE"), or ethylene chlorotrifluoroethylene ("ECTFE").

9. The storage bag of any preceding claim, wherein the non-collapsible port assembly is formed of FEP, PVDF, ETFE, or ECTFE.

10. The storage bag of any preceding claim, wherein the port reinforcing laminate comprises two composite layers (108A, 108B),
each layer comprising a first surface comprising a third polymer and an opposing second surface comprising a fourth polymer, and wherein the two layers are positioned on either side of the port assembly and the collapsible pouch with the second surface of each layer in contact with at least a portion of the non-collapsible port assembly and at least a portion of the collapsible pouch, wherein the relative melting points of the third and fourth polymers are such that the composite layers can be heated to a temperature high enough to melt bond the fourth polymer without melting the third polymer; and optionally
wherein the melting point of the third polymer is at least 30 °C higher than the melting point of the fourth polymer.

11. The storage bag of claim 10, wherein the fourth polymer bonds the two composite layers to at least a portion of the collapsible pouch, to at least a portion of the port assembly, and to each other.

12. The storage bag of any of claims 10-11, wherein the third polymer comprises PTFE or PFA and the fourth polymer comprises FEP, PVDF, ETFE, or ECTFE.

13. The storage bag of any of claims 10-12, wherein the portion of the collapsible pouch overlapped by the port reinforcing laminate comprises a joint, and wherein the port reinforcing laminate covers the joint.

14. A method of forming a storage bag, the method comprising:
providing a collapsible pouch comprising an internal volume and an aperture at one end;
providing a non-collapsible port assembly comprising a body and a snout, wherein the body comprises at least two conduits passing therethrough;
locating the end of the collapsible pouch including the aperture between two composite layers of a port reinforcing laminate, wherein the two composite layers each comprise a first surface comprising a fifth polymer and a second surface comprising a sixth polymer, wherein the end of the collapsible pouch contacts the second surface of each composite layer, and wherein the relative melting points of the fifth and sixth polymers are such that the composite layers can be heated to a temperature high enough to melt bond the sixth polymer without melting the fifth polymer;
melt bonding the port reinforcing laminate to the end of the collapsible pouch by heating the two composite layers to a temperature between the melting point of the fifth polymer and the melting point of the sixth polymer;
locating the port assembly between the two composite layers, where at least a portion of the port assembly contacts the second surface of each composite layer; and
melt bonding the two composite layers of the port reinforcing laminate to the at least a portion of the port assembly by heating the two composite layers to a temperature between the melting point of the fifth polymer and the melting point of the sixth polymer,
wherein melt bonding the two composite layers to the at least a portion of the port assembly forms at least one peripheral cavity extending from the collapsible pouch to at least one conduit so the at least one conduit is in fluid communication with the internal volume through the peripheral cavity.

15. The method of claim 14, wherein locating the end of the collapsible pouch between the two composite layers and locating the portion of the port assembly between the two composite layers are both carried out before melt bonding the port reinforcing laminate to the end of the collapsible pouch and to the at least a portion of the port assembly, and wherein melt bonding the port reinforcing laminate to the end of the collapsible pouch and to the at least a portion of the port are carried out in a single step; and optionally
wherein melt bonding the two composite layers to the collapsible pouch and melt bonding the two composite layers to the port assembly secure the port assembly with the body spaced apart from the collapsible pouch and the snout extending from the body into the internal volume through the aperture.

## Patentansprüche

1. Aufbewahrungstasche (100), umfassend:
einen zusammenfaltbaren Beutel (102), der ein Innenvolumen und eine Öffnung an einem Ende umfasst;
eine nicht zusammenfaltbare Anschlussanordnung, die einen Körper (116) und eine Tülle (118) umfasst, wobei der Körper mindestens zwei Leitungen (120A, 120C) umfasst, die durch diesen hindurchführen;
ein Anschlussverstärkungslaminat (108), das die Anschlussanordnung und das Ende des zusammenfaltbaren Beutels, einschließlich der Öffnung, überlappt, um die Anschlussanordnung mit dem Körper, der von dem zusammenfaltbaren Beutel beabstandet ist, und der Tülle, die sich von dem Körper durch die Öffnung in das Innenvolumen erstreckt, festzuhalten; und
mindestens einen peripheren Hohlraum (124), der durch das Anschlussverstärkungslaminat und einen Abschnitt der Anschlussanordnung gebildet wird und sich von der Öffnung des zusammenfaltbaren Beutels zu mindestens einer Leitung erstreckt, sodass die mindestens eine Leitung durch den peripheren Hohlraum in Fluidverbindung mit dem Innenvolumen steht.

2. Aufbewahrungstasche nach Anspruch 1, wobei eine der mindestens zwei Leitungen eine Befüllleitung ist und eine andere der mindestens zwei Leitungen eine Entnahmeleitung ist.

3. Aufbewahrungstasche nach Anspruch 1 oder 2, wobei der Körper der nicht zusammenfaltbaren Anschlussanordnung ferner eine Probenentnahmeleitung umfasst.

4. Aufbewahrungstasche nach einem der vorhergehenden Ansprüche, wobei zwei oder mehr der mindestens zwei Leitungen durch den mindestens einen peripheren Hohlraum und die Öffnung in Fluidverbindung mit dem Innenvolumen stehen.

5. Aufbewahrungstasche nach einem der vorhergehenden Ansprüche, wobei mindestens eine der mindestens zwei Leitungen durch die nicht zusammenfaltbare Tülle in Fluidverbindung mit dem Innenvolumen steht.

6. Aufbewahrungstasche nach einem der vorhergehenden Ansprüche, wobei die Anschlussanordnung ferner einen oder mehrere Verbinder umfasst, die sich außerhalb des Anschlussverstärkungslaminats erstrecken, um einen oder mehrere Schläuche mit der Anschlussanordnung zu verbinden, sodass jeder Schlauch in Fluidverbindung mit mindestens einer Leitung der Anschlussanordnung steht.

7. Aufbewahrungstasche nach einem der vorhergehenden Ansprüche, wobei der zusammenfaltbare Beutel eine Innenfläche, die aus einem ersten Polymer besteht, und eine Außenfläche, die aus einem zweiten Polymer besteht, umfasst, wobei die relativen Schmelzpunkte des ersten und zweiten Polymers so sind, dass der zusammenfaltbare Beutel auf eine Temperatur erhitzt werden kann, die hoch genug ist zum Schmelzbinden des zweiten Polymers, ohne das erste Polymer zu schmelzen; und optional
wobei der Schmelzpunkt des ersten Polymers mindestens 30 °C höher ist als der Schmelzpunkt des zweiten Polymers.

8. Aufbewahrungstasche nach Anspruch 7, wobei das erste Polymer Polytetrafluorethylen ("PTFE") oder Perfluoralkoxy ("PFA") umfasst und das zweite Polymer fluoriertes Ethylenpropylen ("FEP"), Polyvinylidenfluorid ("PVDF"), Ethylentetrafluorethylen ("ETFE") oder Ethylenchlortrifluorethylen ("ECTFE") umfasst.

9. Aufbewahrungstasche nach einem der vorhergehenden Ansprüche, wobei die nicht zusammenfaltbare Anschlussanordnung aus FEP, PVDF, ETFE oder ECTFE besteht.

10. Aufbewahrungstasche nach einem der vorhergehenden Ansprüche, wobei das Anschlussverstärkungslaminat zwei Verbundschichten (108A, 108B) umfasst,
wobei jede Schicht eine erste Oberfläche, die ein drittes Polymer umfasst, und eine gegenüberliegende zweite Oberfläche umfasst, die ein viertes Polymer umfasst, und wobei die zwei Schichten auf beiden Seiten der Anschlussanordnung und des zusammenfaltbaren Beutels angeordnet sind, wobei die zweite Oberfläche jeder Schicht in Kontakt mit mindestens einem Abschnitt der nicht zusammenfaltbaren Anschlussanordnung und mindestens einem Abschnitt des zusammenfaltbaren Beutels steht, wobei die relativen Schmelzpunkte des dritten und vierten Polymers so sind, dass die Verbundschichten auf eine Temperatur erhitzt werden können, die hoch genug ist zum Schmelzbinden des vierten Polymers, ohne das dritte Polymer zu schmelzen; und optional
wobei der Schmelzpunkt des dritten Polymers mindestens 30 °C höher ist als der Schmelzpunkt des vierten Polymers.

11. Aufbewahrungstasche nach Anspruch 10, wobei das vierte Polymer die zwei Verbundschichten mit mindestens einem Abschnitt des zusammenfaltbaren Beutels, mit mindestens einem Abschnitt der Anschlussanordnung und miteinander bindet.

12. Aufbewahrungstasche nach einem der Ansprüche 10-11, wobei das dritte Polymer PTFE oder PFA umfasst und das vierte Polymer FEP, PVDF, ETFE oder ECTFE umfasst.

13. Aufbewahrungstasche nach einem der Ansprüche 10-12, wobei der Abschnitt des zusammenfaltbaren Beutels, der von dem Anschlussverstärkungslaminat überlappt wird, eine Verbindungsstelle umfasst, und wobei das Anschlussverstärkungslaminat die Verbindungsstelle bedeckt.

14. Verfahren zum Bilden einer Aufbewahrungstasche, wobei das Verfahren umfasst:
Bereitstellen eines zusammenfaltbaren Beutels, der ein Innenvolumen und eine Öffnung an einem Ende umfasst;
Bereitstellen einer nicht zusammenfaltbaren Anschlussanordnung, die einen Körper und eine Tülle umfasst, wobei der Körper mindestens zwei durch diesen hindurchführende Leitungen umfasst;
Platzieren des Endes des zusammenfaltbaren Beutels, einschließlich der Öffnung, zwischen zwei Verbundschichten eines Anschlussverstärkungslaminats, wobei die zwei Verbundschichten jeweils eine erste Oberfläche, die ein fünftes Polymer umfasst, und eine zweite Oberfläche, die ein sechstes Polymer umfasst, umfassen, wobei das Ende des zusammenfaltbaren Beutels die zweite Oberfläche jeder Verbundschicht berührt, und
wobei die relativen Schmelzpunkte des fünften und sechsten Polymers derart sind, dass die Verbundschichten auf eine Temperatur erhitzt werden können, die hoch genug ist zum Schmelzbinden des sechsten Polymers, ohne das fünfte Polymer zu schmelzen;
Schmelzbinden des Anschlussverstärkungslaminats mit dem Ende des zusammenfaltbaren Beutels durch Erhitzen der zwei Verbundschichten auf eine Temperatur zwischen dem Schmelzpunkt des fünften Polymers und dem Schmelzpunkt des sechsten Polymers;
Platzieren der Anschlussanordnung zwischen den zwei Verbundschichten, wobei mindestens ein Abschnitt der Anschlussanordnung die zweite Oberfläche jeder Verbundschicht berührt; und
Schmelzbinden der zwei Verbundschichten des Anschlussverstärkungslaminats mit mindestens einem Abschnitt der Anschlussanordnung durch Erhitzen der zwei Verbundschichten auf eine Temperatur zwischen dem Schmelzpunkt des fünften Polymers und dem Schmelzpunkt des sechsten Polymers,
wobei das Schmelzbinden der zwei Verbundschichten mit dem mindestens einen Abschnitt der Anschlussanordnung mindestens einen peripheren Hohlraum bildet, der sich von dem zusammenfaltbaren Beutel zu mindestens einer Leitung erstreckt, sodass die mindestens eine Leitung durch den peripheren Hohlraum in Fluidverbindung mit dem Innenvolumen steht.

15. Verfahren nach Anspruch 14, wobei sowohl das Platzieren des Endes des zusammenfaltbaren Beutels zwischen den zwei Verbundschichten als auch das Platzieren des Abschnitts der Anschlussanordnung zwischen den zwei Verbundschichten vor dem Schmelzbinden des Anschlussverstärkungslaminats mit dem Ende des
zusammenfaltbaren Beutels und mit dem mindestens einen Abschnitt der Anschlussanordnung durchgeführt wird, und wobei das Schmelzbinden des Anschlussverstärkungslaminats mit dem Ende des zusammenfaltbaren Beutels und mit dem mindestens einen Abschnitt des Anschlusses in einem einzigen Schritt durchgeführt wird; und
optional
wobei das Schmelzbinden der zwei Verbundschichten mit dem zusammenfaltbaren Beutel und das Schmelzbinden der zwei Verbundschichten mit der Anschlussanordnung die Anschlussanordnung mit dem Körper, der vom zusammenfaltbaren Beutel beabstandet ist, und der Tülle, die sich vom Körper durch die Öffnung in das Innenvolumen erstreckt, sichert.

## Revendications

1. Sac de stockage (100), comprenant :
une poche compressible (102) comprenant un volume interne et une ouverture au niveau d'une extrémité ;
un ensemble orifice non-compressible comprenant un corps (116) et un bec (118), dans lequel le corps comprenant au moins deux conduits (120A, 120C) le traversant :
un stratifié de renforcement d'orifice (108) chevauchant l'ensemble orifice et l'extrémité de la poche compressible comprenant l'ouverture pour retenir l'ensemble orifice avec le corps espacé de la poche compressible et le bec s'étendant à partir du corps dans le volume interne à travers l'ouverture ; et
au moins une cavité périphérique (124) formée par le stratifié de renforcement d'orifice et une partie de l'ensemble orifice et s'étendant à partir de l'ouverture de la poche compressible jusqu'à au moins un conduit de sorte que l'au moins un conduit soit en communication fluidique avec le volume interne à travers la cavité périphérique.

2. Sac de stockage selon la revendication 1, dans lequel l'un des au moins deux conduits est un conduit de remplissage et un autre des au moins deux conduits est un conduit d'extraction.

3. Sac de stockage selon la revendication 1 ou 2, dans lequel le corps de l'ensemble orifice non compressible comprend en outre un conduit d'échantillonnage.

4. Sac de stockage selon l'une quelconque des revendications précédentes, dans lequel deux ou plus des au moins deux conduits sont en communication fluidique avec le volume interne à travers l'au moins une cavité périphérique et l'ouverture.

5. Sac de stockage selon l'une quelconque des revendications précédentes, dans lequel au moins l'un des au moins deux conduits est en communication fluidique avec le volume interne à travers le bec non compressible.

6. Sac de stockage selon l'une quelconque des revendications précédentes, dans lequel l'ensemble orifice comprend en outre un ou plusieurs connecteurs qui s'étendent à l'extérieur du stratifié de renforcement d'orifice pour connecter un ou plusieurs tubes à l'ensemble orifice de sorte que chaque tube soit en communication fluidique avec au moins un conduit de l'ensemble orifice.

7. Sac de stockage selon l'une quelconque des revendications précédentes, dans lequel la poche compressible comprend une surface interne formée d'un premier polymère et une surface externe formée d'un deuxième polymère, dans lequel les points de fusion relatifs des premier et deuxième polymères sont tels que la poche compressible peut être chauffée à une température suffisamment élevée pour faire lier par fusion le deuxième polymère sans faire fondre le premier polymère ; et éventuellement
dans lequel le point de fusion du premier polymère est supérieur d'au moins 30° C au point de fusion du deuxième polymère.

8. Sac de stockage selon la revendication 7, dans lequel le premier polymère comprend du polytétrafluoroéthylène (« PTFE ») ou du perfluoroalcoxy (« PFA ») et le deuxième polymère comprend de l'éthylène propylène fluoré (« FEP »), du polyfluorure de vinylidène (« PVDF »), de l'éthylène tétrafluoroéthylène (« ETFE ») ou de l'éthylène chlorotrifluoroéthylène (« ECTFE »).

9. Sac de stockage selon l'une quelconque des revendications précédentes, dans lequel l'ensemble orifice non compressible est formé de FEP, PVDF, ETFE ou ECTFE.

10. Sac de stockage selon l'une quelconque des revendications précédentes, dans lequel le stratifié de renforcement d'orifice comprend deux couches composite (108A, 108B),
chaque couche comprenant une première surface comprenant un troisième polymère et une seconde surface opposée comprenant un quatrième polymère, et dans lequel les deux couches sont positionnées de chaque côté de l'ensemble orifice et de la poche compressible avec la seconde surface de chaque couche en contact avec au moins une partie de l'ensemble orifice non compressible et au moins une partie de la poche compressible, dans lequel les points de fusion relatifs des troisième et quatrième polymères sont tels que les couches composite peuvent être chauffées à une température suffisamment élevée pour faire fondre le quatrième polymère sans faire fondre le troisième polymère ; et éventuellement
dans lequel le point de fusion du troisième polymère est supérieur d'au moins 30° C au point de fusion du quatrième polymère.

11. Sac de stockage selon la revendication 10, dans lequel le quatrième polymère lie les deux couches composite à au moins une partie de la poche compressible, à au moins une partie de l'ensemble orifice et l'une à l'autre.

12. Sac de stockage selon l'une quelconque des revendications 10 à 11, dans lequel le troisième polymère comprend du PTFE ou du PFA et le quatrième polymère comprend du FEP, du PVDF, de l'ETFE ou de l'ECTFE.

13. Sac de stockage selon l'une quelconque des revendications 10 à 12, dans lequel la partie de la poche compressible recouverte par le stratifié de renforcement d'orifice comprend un joint, et dans lequel le stratifié de renforcement d'orifice recouvre le joint.

14. Procédé de formation d'un sac de stockage, le procédé comprenant :
la fourniture d'une poche compressible comprenant un volume interne et une ouverture au niveau d'une extrémité ;
la fourniture d'un ensemble orifice non compressible comprenant un corps et un bec, dans lequel le corps comprend au moins deux conduits le traversant ;
le positionnement de l'extrémité de la poche compressible comprenant l'ouverture entre deux couches composite d'un stratifié de renforcement d'orifice, dans lequel les deux couches composite comprennent chacune une première surface comprenant un cinquième polymère et une seconde surface comprenant un sixième polymère, dans lequel l'extrémité de la poche compressible vient en contact avec la seconde surface de chaque couche composite, et
dans lequel les points de fusion relatifs des cinquième et sixième polymères sont tels que les couches composite peuvent être chauffées à une température suffisamment élevée pour faire lier par fusion le sixième polymère sans faire fondre le cinquième polymère ;
la liaison par fusion du stratifié de renforcement d'orifice à l'extrémité de la poche compressible en chauffant les deux couches composite à une température comprise entre le point de fusion du cinquième polymère et le point de fusion du sixième polymère ;
le positionnement de l'ensemble orifice entre les deux couches composite, où au moins une partie de l'ensemble orifice vient en contact avec la seconde surface de chaque couche composite ; et
la liaison par fusion des deux couches composite du stratifié de renforcement d'orifice à l'au moins une partie de l'ensemble orifice en chauffant les deux couches composite à une température comprise entre le point de fusion du cinquième polymère et le point de fusion du sixième polymère,
dans lequel la liaison par fusion des deux couches composite à l'au moins une partie de l'ensemble orifice forme au moins une cavité périphérique s'étendant de la poche compressible à au moins un conduit de sorte que l'au moins un conduit soit en communication fluidique avec le volume interne à travers la cavité périphérique.

15. Procédé selon la revendication 14, dans lequel le positionnement de l'extrémité de la poche compressible entre les deux couches composite et le positionnement de la partie de l'ensemble orifice entre les deux couches composite sont tous deux réalisés avant la liaison par fusion du stratifié de renforcement d'orifice à l'extrémité de la poche compressible et à l'au moins une partie de l'ensemble orifice, et dans lequel la liaison par fusion du stratifié de renforcement d'orifice à l'extrémité de la poche compressible et à l'au moins une partie de l'orifice est réalisée en une seule étape ; et
éventuellement
dans lequel la liaison par fusion des deux couches composite à la poche compressible et la liaison par fusion des deux couches composite à l'ensemble orifice fixent l'ensemble orifice avec le corps espacé de la poche compressible et le bec s'étendant du corps dans le volume interne à travers l'ouverture.
